(19) Europäisches Patentamt
European Patent Office
Office européen des brevets

(11) **EP 3 982 084 A1**

(12) **EUROPEAN PATENT APPLICATION**
published in accordance with Art. 153(4) EPC

(43) Date of publication:
**13.04.2022 Bulletin 2022/15**

(21) Application number: **20818983.7**

(22) Date of filing: **01.06.2020**

(51) International Patent Classification (IPC):
***G01C 21/20*** (2006.01)

(52) Cooperative Patent Classification (CPC):
**G01C 21/20**

(86) International application number:
**PCT/CN2020/093689**

(87) International publication number:
**WO 2020/244480 (10.12.2020 Gazette 2020/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.06.2019 CN 201910485778**
**05.06.2019 CN 201920841515 U**

(71) Applicant: **Beijing Whyhow Information Technology Co., Ltd**
**Beijing 100176 (CN)**

(72) Inventors:
• **FANG, Jun**
**Shaanxi 710068 (CN)**
• **NIU, Xuheng**
**Beijing 100176 (CN)**
• **LI, Jiangliang**
**Beijing 100176 (CN)**
• **WANG, Qiang**
**Beijing 100176 (CN)**

(74) Representative: **Gregory, John David Charles**
**The IP Asset Partnership Ltd**
**Prama House**
**267 Banbury Road**
**Oxford OX2 7HT (GB)**

(54) **RELATIVE POSITIONING DEVICE, AND CORRESPONDING RELATIVE POSITIONING METHOD**

(57) Disclosed are an apparatus for implementing relative positioning and a corresponding relative positioning method. A positioning apparatus includes one or more first positioning markers and one or more second positioning markers. The first positioning markers are capable of determining a plane. At least a part of the second positioning markers is located outside the plane defined by the first positioning markers. The method includes: obtaining physical position information of the first positioning markers and the second positioning markers on the positioning apparatus; obtaining an image that is photographed by an imaging device and includes the positioning apparatus; determining imaging position information of the first positioning markers and the second positioning markers on the image; and determining, according to the physical position information and the imaging position information of the first positioning markers and the second positioning markers in combination with intrinsic parameter information of an imaging component of the imaging device, position information and/or attitude information of the imaging device relative to the positioning apparatus when the image is photographed.

```
┌─────────────────────────────────────────┐
│ Obtain physical position information of a first positioning │  1101
│ marker and a second positioning marker on a positioning │
│ apparatus │
└─────────────────────────────────────────┘
                      ↓
┌─────────────────────────────────────────┐
│ Obtain an image that is photographed by an imaging │  1102
│ device and includes the positioning apparatus │
└─────────────────────────────────────────┘
                      ↓
┌─────────────────────────────────────────┐
│ Analyze the image to obtain imaging position information │  1103
│ of the first positioning marker and the second positioning │
│ marker on the image │
└─────────────────────────────────────────┘
                      ↓
┌─────────────────────────────────────────┐
│ Determine, according to the physical position information and │  1104
│ the imaging position information of the first positioning marker │
│ and the second positioning marker in combination with intrinsic │
│ parameter information of an imaging component of the imaging │
│ device, position information and/or attitude information of the │
│ imaging device relative to the positioning apparatus when the │
│ image is photographed │
└─────────────────────────────────────────┘
```

FIG. 11

EP 3 982 084 A1

**Description**

The present invention relates to the field of positioning technologies, and in particular, to an apparatus for implementing relative positioning and a corresponding relative positioning method.

The statements in this section are intended only to provide background information relevant to the present invention to aid in its understanding. Unless expressly stated, what is described in this section does not constitute prior art for the technical schemes of the present application.

In many application scenarios, there is a need to determine the position of a device or machine. For example, the position of a vehicle needs to be determined during the navigation of the vehicle. In addition, in some factories, robots or self-driving vehicles are used for distribution or delivery of goods. In a process of distribution or delivery of goods, the positions of these robots or self-driving vehicles need to be determined.

At present, mainstream positioning methods are usually based on wireless signals, for example, GPS positioning, Wi-Fi positioning, and Bluetooth positioning. However, these positioning methods are susceptible to signal interference, making it difficult to obtain accurate positioning results.

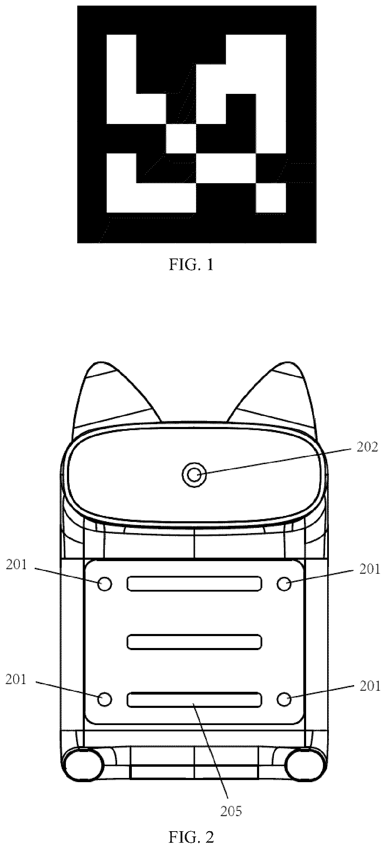

Positioning based on visual markers can overcome these disadvantages to some extent. However, affected by imaging accuracy, such methods only find some applications in short-range positioning. For example, visual markers called AR markers are used in some augmented reality applications to determine the position and attitude of a camera in close proximity. FIG. 1 shows an exemplary AR marker, which is similar to a QR code. In addition, visual markers can also be used in some robotic applications to determine the position and attitude of a camera mounted on a nearby robot. However, existing visual markers are usually flat printed objects. At a relatively long distance from a visual marker, the number of imaging pixels for the visual marker decreases. As a result, a positioning result based on the visual marker becomes unstable or has a large error, making it impossible to accurately determine the position and attitude of the camera.

For this, the present invention provides an apparatus that can implement high relative positioning accuracy and a corresponding relative positioning method.

An aspect of the present invention relates to an apparatus for implementing relative positioning, including: one or more first positioning markers capable of determining one plane; and one or more second positioning markers, at least a part of the second positioning marker(s) being located outside the plane in which the first positioning marker(s) are located, where the first positioning marker(s) and the second positioning marker(s) emit or reflect light capable of being acquired by an imaging device.

Optionally, the apparatus includes at least three first positioning markers that are located in one same plane and are not collinear, and the second positioning marker is located outside the plane in which the first positioning markers are located.

Optionally, a distance from the second positioning markers to the plane in which the first positioning markers are located is at least 0.2 cm.

Optionally, a distance from the second positioning markers to the plane in which the first positioning markers are located is greater than 1/10 of the shortest distance between the first positioning markers.

Optionally, the apparatus includes four first positioning markers, and any three of the four first positioning markers are not collinear.

Optionally, the four first positioning markers are arranged in the form of a rectangle, and the second positioning marker is located in the middle of the rectangle in a horizontal direction.

Optionally, one or more of the first positioning marker(s) and the second positioning marker(s) are configured as data light sources capable of transmitting information.

Optionally, the apparatus further includes one or more data light sources or visual markers used for transmitting information.

Optionally, the apparatus includes one or more visual markers used for transmitting information, and a part of the visual marker(s) is used as the first positioning marker or the second positioning marker.

An aspect of the present invention relates to a relative positioning method implemented by using a positioning apparatus. The positioning apparatus includes one or more first positioning markers and one or more second positioning markers, the first positioning marker(s) being capable of determining one plane, and at least a part of the second positioning marker(s) being located outside the plane in which the first positioning marker(s) are located. The method includes: obtaining an image that is photographed by an imaging device and includes the positioning apparatus; obtaining physical position information of the first positioning marker(s) and the second positioning marker(s); determining imaging position information of the first positioning marker(s) and the second positioning marker(s) on the image; and determining, according to the physical position information and the imaging position information of the first positioning marker(s) and the second positioning marker(s) in combination with intrinsic parameter information of an imaging component of the imaging device, position information and/or attitude information of the imaging device relative to the positioning apparatus when the image is photographed.

Optionally, the physical position information of the first positioning marker(s) and the second positioning marker(s) includes relative physical position information between these positioning markers or absolute physical position information of these positioning markers.

Optionally, the physical position information of the first positioning marker(s) and the second positioning marker(s) is obtained at least partially through communication between the imaging device and the positioning apparatus.

Optionally, the positioning apparatus further includes one or more data light sources or visual markers used for transmitting information, or one or more of the first positioning marker(s) and the second positioning marker(s) are configured as data light sources capable of transmitting information, where the information transmitted by the data light source(s) or the visual marker(s) is capable of being recognized by using the imaging device.

Optionally, the information transmitted by the data light source(s) or the visual marker(s) is capable of being used for obtaining relative or absolute physical position information of the positioning apparatus, the first positioning marker(s) or the second positioning marker(s).

Optionally, the determining position information and/or attitude information of the imaging device relative to the positioning apparatus when the image is photographed includes: determining, by using a Perspective-n-Point (PnP) method, the position information and/or the attitude information of the imaging device relative to the positioning apparatus when the image is photographed; and/or determining perspective distortion related to the first positioning marker(s) and the second positioning marker(s); and determining, according to the perspective distortion, the position information and/or the attitude information of the imaging device relative to the positioning apparatus when the image is photographed.

Another aspect of the present invention relates to a computer program and a storage medium storing the computer program, where the computer program, when executed by a processor, causes the processor to implement the foregoing method.

Still another aspect of the present invention relates to an electronic device, including a processor and a memory, the memory storing a computer program which, when executed by the processor, causes the processor to implement the foregoing method.

Embodiments of the present invention are further described below with reference to the accompanying drawings, in which:

FIG. 1 shows an exemplary AR marker;

FIG. 2 is a front view of an optical label according to an embodiment of the present invention;

FIG. 3 is a side view of the optical label shown in FIG. 2;

FIG. 4 is a perspective view of the optical label shown in FIG. 2;

FIG. 5 shows an exemplary positioning apparatus, with positioning markers on the positioning apparatus having depth differences;

FIG. 6 shows an image obtained when the positioning apparatus shown in FIG. 5 is photographed from a left side by using an imaging device;

FIG. 7 shows an image obtained when the positioning apparatus shown in FIG. 5 is photographed from a right side by using an imaging device;

FIG. 8 is a perspective view of a positioning apparatus according to an embodiment of the present invention, with positioning markers on the positioning apparatus having no depth difference;

FIG. 9 shows an image obtained when the positioning apparatus shown in FIG. 8 is photographed from a left side by using an imaging device;

FIG. 10 shows an image obtained when the positioning apparatus shown in FIG. 8 is photographed from a right side by using an imaging device;

FIG. 11 shows a relative positioning method according to an embodiment of the present invention;

FIG. 12 is an imaging effect diagram of an optical label according to an embodiment of the present application photographed in one direction; and

FIG. 13 is an imaging effect diagram of an optical label according to an embodiment of the present application photographed in another direction.

To make the objectives, technical solutions, and advantages of the present invention more comprehensible, the present invention is further described below in detail with reference to the accompanying drawings and specific embodiments. It should be understood that the specific embodiments described herein are merely used to describe the present invention rather than limiting the present invention.

In order to facilitate explanation of that present invention, an optical communication device is hereinafter described as an example. However, a person having ordinary skill in the art can understand from the description of the present application that the schemes of the present invention are not limited to the optical communication apparatus, but can be applied to any apparatus having the relative positioning features of the present invention.

The optical communication apparatus is also referred to as an optical label. The two terms are used interchangeably herein. The optical label is capable of transmitting information in different light emission manners, and has the advantages of long recognition distances and relaxed requirements on visible light conditions. In addition, information transmitted by the optical label can change with time, so that large information capacity and flexible configuration capabilities can be provided.

The optical label may usually include a controller and at least one light source. The controller may drive the light source in different driving modes to transmit different information to the outside. The optical label further includes a controller configured to select a corresponding driving mode for each light source according to information to be transmitted. For example, in different driving modes, the controller may use different drive signals to control light emission manners of the light source, so that when the optical label is photographed by a device with an imaging function, the image of the light source may show different appearances (for example, different colors, patterns, and brightness). The driving mode of each light source at the moment can be parsed out by analyzing the image of the light source in the optical label, to parse out information transmitted by the optical label at the moment.

To provide an appropriate service to a user based on an optical label, one piece of identification (ID) information may be assigned to each optical label. The ID information is used for uniquely identifying or recognizing the optical label by a manufacturer, an administrator, a user, or the like of the optical label. Usually, the light source may be driven by the controller in the optical label to transmit the ID information to the outside, and a user may use a device to perform image acquisition on the optical label to obtain the ID information transmitted by the optical label, so that the user can access a corresponding service based on the ID information, for example, access a web page associated with the ID information, or obtain other information (for example, position information of the optical label corresponding to the ID information) associated with the ID information. The device may use an image acquisition component (for example, a camera) on the device to perform image acquisition on the optical label to obtain an image that includes the optical label, and analyze the imaging of the optical label (or each light source in the optical label) in the image to recognize the information transmitted by the optical label.

The ID information of each optical label or other information such as service information related to the optical label and description information or attributes related to the optical label, for example, the position information, physical size information, physical shape information, attitude or orientation information of the optical label, may be stored on a server. The optical label may also have uniform or default physical size information, physical shape information, and the like. The device may use the recognized ID information of the optical label to search the server for other information related to the optical label. The position information of the optical label may be a physical position of the optical label in the physical world, and may be indicated by geographic coordinate information.

FIG. 2 is a front view of an optical label according to an embodiment of the present invention. The optical label includes three data light sources 205 used for transmitting information to the outside, four first positioning markers 201 located on two sides of the three data light sources 205, and one second positioning marker 202 located above the three data light sources 205. The four first positioning markers 201 are located in a same plane but are not collinear, and the second positioning marker 202 is located outside the plane in which the four first positioning markers 201 are located. That is, there is a depth difference between the first positioning markers 201 and the second positioning marker 202. The first positioning markers and the second positioning marker emit or reflect light capable of being acquired by an imaging device. The light may be visible or invisible to human eyes.

In the embodiment shown in FIG. 2, the four first positioning markers 201 are arranged in the form of a rectangle, and the second positioning marker 202 is located in the middle of the rectangle in a horizontal direction. However, a person having ordinary skill in the art may understand that this does not constitute a limitation, and the first positioning markers 201 and the second positioning marker 202 may have other arrangements. Some features (for example, two ear-like features are provided on an upper part of the optical label) for making the optical label more aesthetically pleasing are further shown in the embodiment of FIG. 2. These features are only exemplary, and do not constitute a limitation to the present invention.

The data light source 205 may be any light source capable of transmitting information to the outside. For example, the data light source 205 may be a single LED, an array formed by a plurality of LEDs, a display screen or a part thereof, or even an illuminated area of light (for example, an illuminated area of light on a wall) may be used as the data light source 205. The data light source 205 may have any surface shape, for example, a circle, a square, a rectangle or a strip. The data light source 205 may include or may be additionally provided with various common optical components, for example, a light guide plate, a light-subduing plate or a diffuser. In some embodiments, the optical label may be provided with one or more data light sources 205, and the number of the data light sources 205 is not limited to 3.

In an embodiment, a visual marker may be used instead of the data light sources 205 to transmit information to the outside. For example, a printed QR code, applet code, bar code, or the like may be used as a visual marker. The visual marker may be arranged between positioning markers, or may be arranged at another place, for example, above or below the positioning markers.

The first positioning markers 201 and/or the second positioning marker 202 may be a component that does not emit light actively or can emit light actively, for example a lamp, so as to be used in a scenario without ambient light or with low ambient light. The first positioning markers 201 and/or the second positioning marker 202 may have any appropriate surface shape, for example, a circle, a square, a rectangle, a triangle, a hexagon, an ellipse, etc. The first positioning markers 201 and/or the second positioning marker 202 may be alternatively a three-dimensional positioning marker, for example, a sphere, a cylinder, a cube, etc.

In some embodiments, there may be three or more than four first positioning markers 201, as long as there are at least three first positioning markers that are not collinear. The three first positioning markers 201 that are not collinear are sufficient to determine one plane, and the second positioning marker 202 is located outside the plane determined by the three first positioning markers 201.

In some embodiments, the second positioning marker 202 may be located at another place on the optical label, for example, located below or in the middle of the first positioning markers 201, and the optical label may include more than one second positioning marker 202. In an embodiment, the optical label includes two second positioning markers 202 which are located above and below the first positioning markers 201, respectively.

In some embodiments, the data light sources 205 and the first positioning markers 201 may be located in a same plane or located in different planes. In some embodiments, the data light sources 205 and the second positioning marker 202 may be located in a same plane or located in different planes.

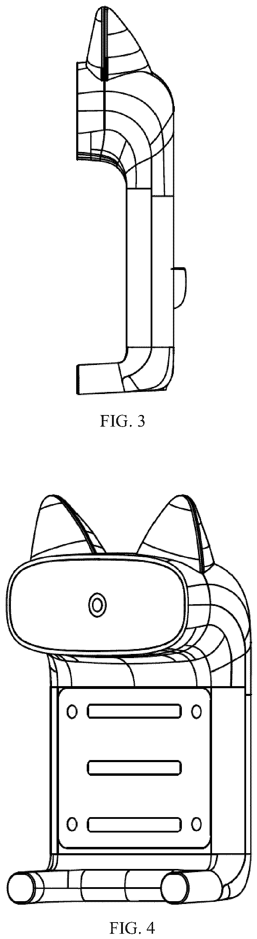

FIG. 3 is a side view of the optical label shown in FIG. 2. FIG. 4 is a perspective view of the optical label shown in FIG. 2. As can be clearly seen from FIG. 3 and FIG. 4, the second positioning marker 202 is located outside the plane defined by the four first positioning markers 201. That is, there is a depth difference between the first positioning markers 201 and the second positioning marker 202.

A positioning apparatus that includes a first positioning marker and a second positioning marker is described above by taking an optical label as an example. However, a person having ordinary skill in the art may understand that the schemes of the present invention are not limited to the optical label, and can be applied to any apparatus that satisfies the following condition that: the apparatus includes at least three first positioning markers that are located in a same plane but are not collinear, and one or more second positioning markers, where the one or more second positioning markers are located outside the plane defined by the first positioning markers. The foregoing apparatus may be referred to as the "positioning apparatus" hereinafter. In some embodiments, the positioning apparatus may include only a first positioning marker and a second positioning marker used for implementing relative positioning, but does not include a data light source used for transmitting information to the outside. Alternatively, the first positioning marker and/or the second positioning marker in the positioning apparatus may also be configured as a data light source capable of transmitting information to the outside in addition to being used as a positioning marker. In some embodiments, it is advantageous that the positioning apparatus can be used not only for relative positioning and but also for transmitting information to the outside. In this case, the imaging device is enabled to obtain ID information of the positioning apparatus. The ID information can be used for obtaining an absolute position of the positioning apparatus, so that an absolute position of the imaging device can be determined according to the absolute position of the positioning apparatus and a relative position of the imaging device relative to the positioning apparatus. In some embodiments, the positioning apparatus may be used in combination with a visual marker (for example, a QR code, an applet code, a bar code, etc.), and the two may be integrated or arranged together. In some embodiments, a part (for example, some feature points in the visual marker, a corner of the visual marker, etc.) of the visual marker may be used as the first positioning marker or the second positioning marker of the positioning apparatus. For example, one or more feature points in the visual marker may be used as one or more first positioning markers of the positioning apparatus. In an embodiment, the visual marker may be used for providing the ID information of the positioning apparatus or the visual marker, position information of the positioning apparatus or the visual marker in the physical world, or relative or absolute position information of one or more positioning markers in the physical world.

According to different application scenarios, a distance or depth difference between the plane defined by the first positioning markers 201 and the second positioning marker 202 may have different values. Generally, if a required positioning range is relatively large (for example, relative positioning needs to be implemented in a relatively large range around the positioning apparatus), a relatively large depth difference is required. If the imaging device has a relatively low resolution, a relatively large depth difference is required. In contrast, if the required positioning range is relatively small and/or the imaging device has a relatively high resolution, a relatively small depth difference can satisfy the requirements. Theoretically, in a case that there is a depth difference, to observe a change in an imaging position of the second positioning marker relative to the first positioning marker (that is, the change in the imaging position is discernible in pixels), the imaging at a distance corresponding to the depth difference usually needs to be greater than or equal to two pixels. Assuming that the resolution of the imaging device is R, and the largest distance required for the positioning is D, the smallest depth difference is an actual object length at a distance D corresponding to two pixels when imaging at the resolution R. More specifically, assuming that the resolution of the imaging device is $R = Rx * Ry$, and the imaging component has a size of $L*W$, in a coordinate system of the imaging device, a focal length in an x direction of the imaging device is fx, a focal length in a y direction is fy, the largest distance required for positioning is D, a size of an object is $x*y$, and an imaging size of the object is $u*v$ (the foregoing sizes x, y, u, and v are all projected sizes of the object on an x axis and a y axis of a coordinate system of a camera). The following formula may be obtained:

$$fx/D = u * (L/Rx)/x,$$

$$fy/D = v * (W/Ry)/y,$$

$$let\ u = v = two\ pixels,$$

$$x\_min = 2 * L * D/(fx * Rx),\ and$$

$$y\_min = 2 * W * D/(fy * Ry).$$

The minimum value of x_min and y_min may be used as the minimum value depth_min of the depth difference, that is, depth_min = min(x_min, y_min).

For example, in a case of using an imaging device with 4K resolution (2160*3840), when a recognition distance is 10 m, the image of a line segment of 2/3 cm is approximately two pixels. Therefore, the smallest depth difference needs to be 2/3 cm. If the recognition distance becomes 50 m (for example, for some outdoor positioning scenarios), the smallest depth difference needs to be 10/3 cm. If the recognition distance becomes 1.5 m (for example, for some indoor positioning scenarios), the smallest depth difference needs to be 0.1 cm.

In some embodiments, preferably, the distance or depth difference between the plane defined by the first positioning marker and the second positioning marker is at least 0.1 cm, at least 0.2 cm, at least 0.5 cm, at least 0.8 cm, at least 1 cm, at least 1.5 cm, or the like. In some embodiments, the distance or depth difference between the plane defined by the first positioning marker and the second positioning marker may be alternatively determined according to distances between the first positioning markers. Preferably, the distance or depth difference between the plane defined by the first positioning markers and the second positioning marker is greater than 1/10, 1/8, 1/5, 1/4, 1/3 or the like of the shortest distance between the first positioning markers.

A relative positioning method implemented by using the positioning apparatus according to an embodiment is described below. The relative positioning method is used for determining the position information and/or attitude information of the imaging device relative to the positioning apparatus. The position information and the attitude information may be generally referred to as "pose information". It needs to be noted that according to different requirements of application scenarios, in some cases, it may not be necessary to obtain both the position information and the attitude information of the imaging device. Instead, only one of the position information and the attitude information may be obtained, for example only the position information of the imaging device.

In an embodiment, to obtain a position and/or an attitude of the imaging device relative to the positioning apparatus, one coordinate system may be established according to the positioning apparatus. The coordinate system may be referred to as a coordinate system of the positioning apparatus. The first positioning marker and the second positioning marker on the positioning apparatus form some spatial points in the coordinate system, and have corresponding coordinates in the coordinate system. After an image including the positioning apparatus is photographed by using the imaging device, for example, image points corresponding to respective spatial points may be found in the image according to a physical structural feature or a geographical structural feature of the positioning apparatus, and imaging positions of the image points in the image are determined. Pose information (R, t) of the imaging device in the coordinate system when the image is photographed can be calculated according to coordinates of the spatial points in the coordinate system, imaging positions of the corresponding image points in the image, and intrinsic parameter information of the camera, where R is a rotation matrix indicating attitude information of the camera in the coordinate system, and t is a displacement vector indicating position information of the camera in the coordinate system. Methods for calculating R and t are known in the prior art. For example, R and t may be calculated by using a 3D-2D Perspective-n-Point (PnP) method. In order not to obscure the present invention, details are not described herein.

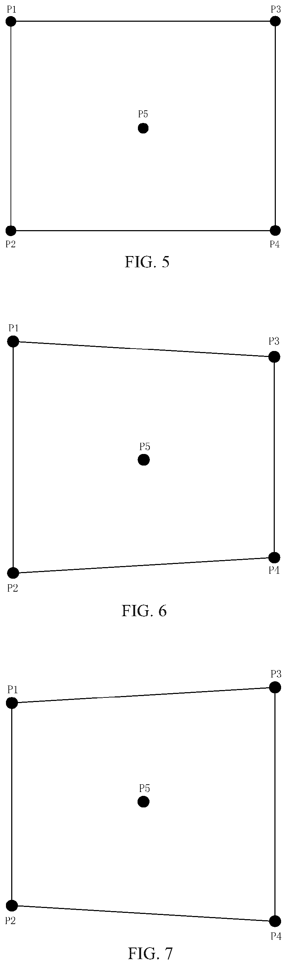

During the calculation of the pose information (R, t) of the imaging device, positions of image points corresponding to positioning markers on the positioning apparatus on the image need to be accurately determined. However, this may be challenging if these positioning markers are located in the same plane. FIG. 5 shows an exemplary positioning apparatus on which the positioning markers have no depth difference. Specifically, the positioning apparatus includes five positioning markers P1, P2, P3, P4, and P5 represented by solid black dots, and the five positioning markers are located in the same plane. Among the five positioning markers, the four positioning markers P1, P2, P3, and P4 form a rectangular, and the positioning marker P5 is located at the center of the rectangle. FIG. 6 shows an image obtained when the positioning apparatus shown in FIG. 5 is photographed from a left side by using an imaging device. FIG. 7 shows an image obtained when the positioning apparatus shown in FIG. 5 is photographed from a right side by using an imaging device. It may be seen that the image of the positioning apparatus has corresponding perspective distortion. Specifically, according to the principle of "foreshortening" in visual imaging, when the positioning apparatus is photographed from a left side by using the imaging device, a distance between the positioning markers P1 and P2 is greater than a distance between the positioning markers P3 and P4. In contrast, when the positioning apparatus is photographed from a right side by using the imaging device, the distance between the positioning markers P1 and P2 is less than the distance between the positioning markers P3 and P4. Pose information of the imaging device in a physical world coordinate system may be calculated according to coordinates of the positioning markers P1, P2, P3, P4, and P5 of the positioning apparatus in the physical world coordinate system and imaging positions of these positioning markers by using, for example, a PnP method. However, in many cases, there are some errors in determining the imaging positions of the positioning markers, resulting in an error in the calculated pose information of the imaging device. These errors become more obvious when the distance between the imaging device and the positioning apparatus is relatively large. For example, when the positioning apparatus is relatively far from the imaging device, a formed image of the positioning apparatus is small. In this case, the distance between the positioning markers P1 and P2 or the distance between the positioning markers P3 and P4 occupies a very small number of pixels (for example, fewer than tens of pixels) and a pixel difference between the two distances is even smaller (for example, only one to three pixels). In addition, due to an error in image processing (for example, a pixel error in image processing may be one to two pixels), it is difficult to accurately determine the difference between the two distances. Correspondingly, it is also difficult to accurately determine the pose information of the imaging device.

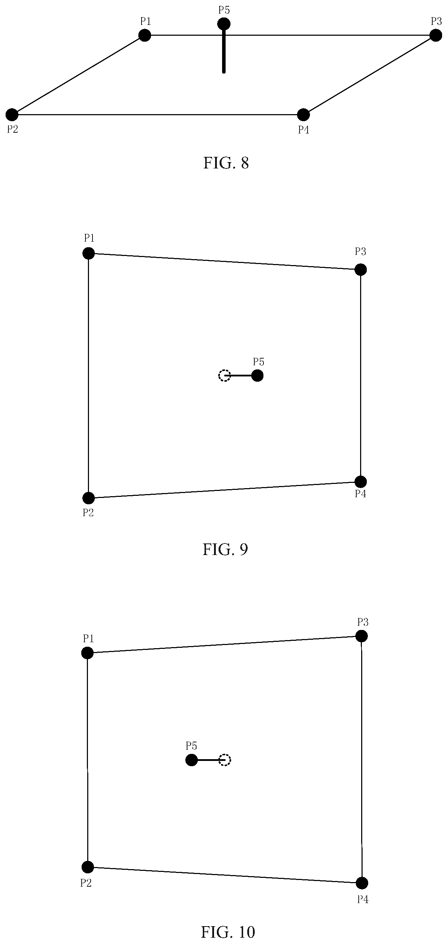

By means of the positioning apparatus in the disclosure, an error in the determined pose information of the imaging device can be greatly mitigated or eliminated. FIG. 8 is a perspective view of a positioning apparatus according to an embodiment of the present invention. The positioning apparatus shown in FIG. 8 is similar to the positioning apparatus shown in FIG. 5. However, the positioning marker P5 at the center is moved outside or protrudes from the plane defined by the other four positioning markers P1, P2, P3, and P4. In this way, when the positioning apparatus shown in FIG. 8 is placed in the manner shown in FIG. 5 and the positioning apparatus is photographed by using the imaging device from a left side or a right side, different imaging effects can be obtained. FIG. 9 shows an image obtained when the positioning apparatus is photographed from a left side by using an imaging device. FIG. 10 shows an image obtained when the positioning apparatus is photographed from a right side by using an imaging device. The dashed circles in FIG. 9 and FIG. 10 represent the imaging position of the positioning marker P5 before the positioning marker P5 is moved. That is, the imaging position of the positioning marker P5 in the positioning apparatus shown in FIG. 5. As can be seen from FIG. 9 and FIG. 10, the positioning marker P5 protrudes from the plane defined by the other four positioning markers P1, P2, P3, and P4. Therefore, when the positioning apparatus is photographed by using the imaging device at different positions, there will be a relatively obvious change in the imaging position of the positioning marker P5 of the positioning apparatus relative to the imaging positions of the positioning markers P1, P2, P3, and P4. Further analysis of the change helps to mitigate or eliminate the error in the calculated pose information of the imaging device. FIG. 9 and FIG. 10 show images obtained when the positioning apparatus is photographed from a left side and a right side by using the imaging device, respectively. A person having ordinary skill in the art can understand that a similar effect will be also observed when the imaging device is used for photographing in another direction. In addition, in some embodiments, any one of the positioning markers P1, P2, P3, and P4 in the positioning apparatus may be omitted.

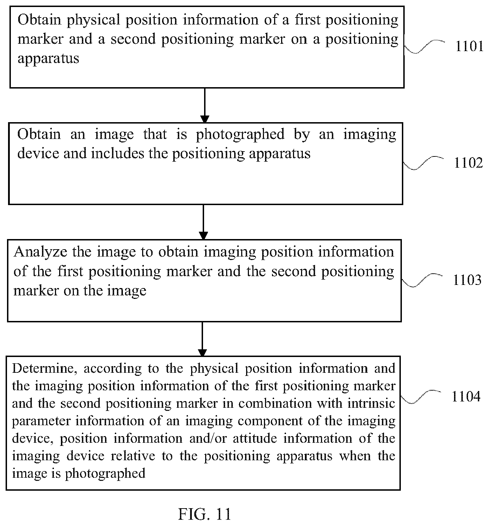

FIG. 11 shows a relative positioning method according to an embodiment of the present invention. In the method, an image that is photographed by an imaging device and includes a positioning apparatus is analyzed, to determine the position information and/or the attitude information of the imaging device relative to the positioning apparatus. The positioning apparatus may include at least three first positioning markers that are located in a same plane and are not collinear, and one or more second positioning markers located outside the plane defined by the first positioning markers.

The method may be performed by the imaging device, and may also be performed by another device or apparatus (for example, server), or may be jointly performed by the imaging device and another device. For example, the imaging device may send an image that is photographed by the imaging device and includes the positioning apparatus to the server. After that, the server may analyze the image to determine a position of the imaging device relative to the positioning apparatus. In this way, software deployment or computing power deployment at the imaging device can be simplified. The method shown in FIG. 11 includes the following steps S1101 to S1104.

At step S1101, physical position information of first positioning markers and a second positioning marker on a positioning apparatus is obtained.

The physical position information of the first positioning markers and the second positioning marker may be obtained in various manners. For example, in some application scenarios (for example, in an automated factory), the positioning apparatus has a fixed specification or model. In this way, the imaging device, the server, or the like may know the physical position information of the first positioning markers and the second positioning marker on the positioning apparatus in advance. In some application scenarios, the positioning apparatus has a communication function, and the imaging device may communicate with the positioning apparatus (for example, through a wireless signal or light), to obtain the physical position information of the first positioning markers and the second positioning marker on the positioning apparatus. The imaging device may directly obtain the physical position information of the first positioning markers and the second positioning marker on the positioning apparatus, or may obtain other information (for example, ID information, specification information, or model information) of the positioning apparatus, and make a search or analysis by using the other information to determine the physical position information of the first positioning markers and the second positioning marker. For example, for the positioning apparatus in the form of the optical label shown in FIG. 2 in the present application, the imaging device may recognize the ID information transmitted by the optical label, and make a search by using the ID information to obtain physical position information of positioning markers on the optical label. The imaging device may also send the recognized information transmitted by the optical label to the server, so that the server can make a search by using the information to obtain the physical position information of the positioning markers on the optical label. The imaging device may send any information obtained through communication between the imaging device and the positioning apparatus to another device or apparatus, for example, a server.

The physical position information of the first positioning markers and the second positioning marker may be relative physical position information, or may be absolute physical position information. In some embodiments, the physical position information of the first positioning markers and the second positioning marker may be a relative position relationship (for example, a relative distance and a relative direction) between positioning markers. In some embodiments, the physical position information of the first positioning markers and the second positioning marker may be coordinate information of the positioning markers in the coordinate system established according to the positioning apparatus. For example, one positioning marker may be used as the origin of the coordinate system, and the positions of the positioning markers can be represented by the coordinate information in the coordinate system. In some embodiments, the physical position information of the first positioning markers and the second positioning marker may be absolute physical position information of the positioning markers in the real world. A person having ordinary skill in the art can understand that the absolute physical position information of the positioning markers is not essential for determining the relative pose information between the imaging device and the positioning apparatus. However, by using the absolute physical position information of the positioning markers, the absolute pose information of the imaging device in the real world can be further determined based on the relative pose information between the imaging device and the positioning apparatus.

At step S1102, an image that is photographed by an imaging device and includes the positioning apparatus is obtained.

The imaging device mentioned herein may be a device (for example, a mobile phone, a tablet computer, smart glasses, a smart helmet, a smart watch, etc.) carried or controlled by a user. However, it can be understood that, the imaging device may alternatively be a machine capable of autonomous movement, for example, an unmanned aerial vehicle, a self-driving car, a robot, etc. An imaging component, for example, a camera, is mounted on the imaging device.

At step S1103, the image is analyzed to obtain imaging position information of the first positioning markers and the second positioning marker on the image.

After the image that is photographed by the imaging device and includes the positioning apparatus is obtained, the imaging positions of the first positioning markers and the second positioning marker of the positioning apparatus on the image can be determined by analyzing the image. The imaging positions may be represented by for example corresponding pixel coordinates.

At step S1104, position information and/or attitude information of the imaging device relative to the positioning apparatus when the image is photographed is determined according to the physical position information and the imaging position information of the first positioning markers and the second positioning marker in combination with intrinsic parameter information of an imaging component of the imaging device.

The imaging component of the imaging device may have corresponding intrinsic parameter information. Intrinsic parameters of the imaging component are parameters related to characteristics of the imaging component, for example, a focal length or a number of pixels of the imaging component. The imaging device may obtain the intrinsic parameter information of its imaging component at the time of photographing an image. The other device or apparatus (for example, the server) may alternatively receive the intrinsic parameter information from the imaging device. For example, when uploading the image to the server, the imaging device may additionally upload the intrinsic parameter information of its imaging component. In some embodiments, the imaging device may alternatively upload model information of its imaging component to the server, and the server may obtain the intrinsic parameter information of the imaging component according to the model information.

After the physical position information of the first positioning markers and the second positioning marker, the imaging position information of the first positioning markers and the second positioning marker, and the intrinsic parameter information of the imaging component of the imaging device are obtained, the position information and/or the attitude information of the imaging device relative to the positioning apparatus can be determined by using various methods (for example, a 3D-2D PnP method, also referred to as a solvePnP method) known in the field. At present, representative methods include a P3P method, an iterative method, an EPnP method, a DLT method, and the like.

In some embodiments, after the physical position information of the first positioning markers and the second positioning marker, the imaging position information of the first positioning markers and the second positioning marker, and the intrinsic parameter information of the imaging component of the imaging device are obtained, the position information and/or the attitude information of the imaging device relative to the positioning apparatus when the image is photographed can be determined by analyzing perspective distortion of these positioning markers, a pattern formed by these positioning markers, or the like. For example, the imaging device may determine distance information and direction information of the imaging device relative to the positioning apparatus in various manners. In an embodiment, the imaging device may determine a relative distance between the imaging device and the positioning apparatus by analyzing an actual size of the pattern formed by the positioning markers and an imaging size of the pattern (the larger the imaging size, the smaller the distance; the smaller the imaging size, the larger the distance). The imaging device may further determine the direction information of the imaging device relative to the positioning apparatus by comparing an actual shape of the pattern formed by the positioning markers and the imaging shape of the pattern. For example, for the image shown in FIG. 9, it may be determined that the positioning apparatus is photographed by the imaging device from a left side, and for the image shown in FIG. 10, it may be determined that the positioning apparatus is photographed by the imaging device from a right side. The imaging device may alternatively determine the attitude information of the imaging device relative to the positioning apparatus according to the imaging of the positioning apparatus. For example, when an imaging position or an imaging region of the positioning apparatus is located at the center of the field of view of the imaging device, it may be considered that the imaging device is currently facing the positioning apparatus. An imaging direction of the positioning apparatus may further be considered during the determination of the attitude of the imaging device. As the attitude of the imaging device changes, the imaging position and/or the imaging direction of the positioning apparatus on the imaging device correspondingly changes. Therefore, the attitude information of the imaging device relative to the positioning apparatus can be obtained according to the imaging of the positioning apparatus on the imaging device.

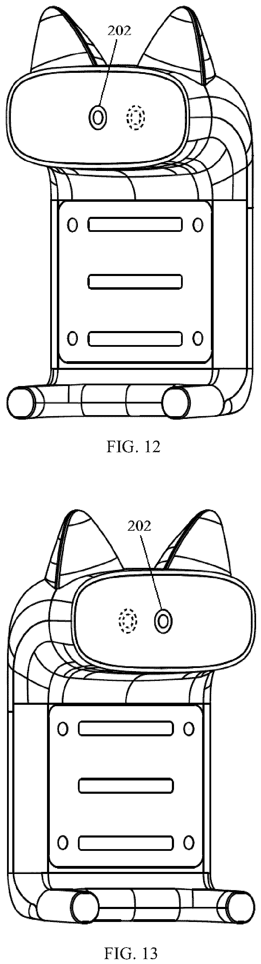

With the optical label according to an embodiment of the present application, when the optical label is photographed at different positions, imaging differences of the positioning markers on the optical label can be observed more clearly, so that an error in the determined pose information of the imaging device can be greatly mitigated or eliminated. FIG. 12 is an imaging effect diagram of an optical label according to an embodiment of the present application photographed in one direction; and FIG. 13 is an imaging effect diagram of an optical label according to an embodiment of the present application photographed in another direction. Solid circles in FIG. 12 and FIG. 13 are images of the second positioning marker 202, and dashed circles show imaging positions when the second positioning marker 202 is located in the plane defined by the first positioning markers 201. As can be clearly seen from FIG. 12 and FIG. 13, the second positioning marker 202 protrudes from the plane defined by the first positioning markers 201. Therefore, when the optical label is photographed by using the imaging device at different positions, there is a relatively obvious change in the imaging position of the second positioning marker 202 relative to the imaging position of the first positioning markers 201. Further analysis of the change helps to mitigate or eliminate the error in the calculated pose information of the imaging device.

In the foregoing embodiments, the description is mainly made with dot-shaped positioning markers. However, a person having ordinary skill in the art may understand that in some embodiments, the first positioning markers and/or the second positioning marker may have another shape. For example, in an embodiment, a strip-shaped positioning marker may be used to replace two first positioning markers 201 shown in FIG. 2, (for example, the two first positioning markers 201 on the left side or the two first positioning markers 201 on the right side). In an embodiment, the first positioning markers may include one strip-shaped positioning marker and one dot-shaped positioning marker not collinear with the strip-shaped positioning marker, to jointly determine a plane. In an embodiment, the first positioning markers may include two strip-shaped positioning markers located in the same plane. For example, for the positioning apparatus shown in FIG. 8, one strip-shaped positioning marker connecting P1 and P2 may be used to replace the positioning markers P1 and P2. One strip-shaped positioning marker connecting P3 and P4 may be used to replace the positioning markers P3 and P4. In an embodiment, one planar polygonal frame (for example, a triangular frame or a rectangular frame) may be used as the first positioning marker. The polygonal frame itself determines a plane. For example, for the positioning apparatus shown in FIG. 8, one rectangular frame connecting the positioning markers P1, P2, P3, and P4 may be used to replace the positioning markers P1, P2, P3, and P4. In an embodiment, one planar positioning marker (for example, a triangular positioning marker or a rectangular positioning marker) may be used as the first positioning markers. The planar positioning marker itself determines a plane. For example, for the positioning apparatus shown in FIG. 8, a rectangular flat panel defined by the positioning markers P1, P2, P3, and P4 may be used to replace the positioning markers P1, P2, P3, and P4. Similarly, the second positioning marker may have another shape, for example, a strip shape, a polygonal frame shape or a planar shape. In one case, the overall second positioning marker may be located outside the plane defined by the first positioning markers. In another case, the second positioning marker may intersect the plane determined by the first positioning markers, as long as a part of the second positioning marker (for example, one endpoint of the second positioning marker) is located outside the plane defined by the first positioning markers.

Position calculation results obtained by the positioning apparatus according to an embodiment of the present invention through repeated experiments are described below.

I.

Experiments in an X direction (a transverse direction): Relative positioning results toward the left and toward the right are tested at one meter in front of the positioning apparatus. A photographing position of the imaging device is moved toward the left and right by 0.5 meters, 1 meter or 1.5 meters, respectively. The positioning apparatus is taken as the origin of a spatial coordinate system. When the imaging device performs photographing on the left side, the X coordinate of the imaging device is a negative value. When the imaging device performs photographing on the right side, the X coordinate of the imaging device is a positive value. All the data is in millimeter (mm). X, Y, and Z represent calculated coordinates of the imaging device, and X0, Y0, and Z0 represent actual coordinates of the imaging device when the positioning apparatus is photographed.

| | Sequence number | Calculated coordinates | | | Actual coordinates | | |
|---|---|---|---|---|---|---|---|
| | | X | Y | Z | X0 | Y0 | Z0 |
| Left-side photographing | 1 | -534.1823506 | 38.6774129 | -1045.290312 | -500 | 0 | -1000 |
| | 2 | -530.1324135 | 36.2134423 | -1040.242341 | -500 | 0 | -1000 |
| | 3 | -524.3143412 | 34.3414513 | -1029.132124 | -500 | 0 | -1000 |
| | 4 | -1048.303411 | 36.4328489 | -1065.855322 | -1000 | 0 | -1000 |
| | 5 | -1044.314153 | 54.1351315 | -1054.531123 | -1000 | 0 | -1000 |
| | 6 | -1023.423243 | 54.2342341 | -1065.123412 | -1000 | 0 | -1000 |
| | 7 | -1558.464576 | 49.8987908 | -1034.548561 | -1500 | 0 | -1000 |
| | 8 | -1548.165412 | 37.2341252 | -1023.412423 | -1500 | 0 | -1000 |
| | 9 | -1557.234524 | 43.1422423 | -1015.243234 | -1500 | 0 | -1000 |
| Right-side photographing | 1 | 467.80759515 | 34.5385831 | -1050.085191 | 500 | 0 | -1000 |
| | 2 | 478.14356678 | 31.5352356 | -1074.342534 | 500 | 0 | -1000 |
| | 3 | 470.41599578 | 37.4381849 | -1053.133453 | 500 | 0 | -1000 |
| | 4 | 1023.5663027 | 57.053218 | -1034.685983 | 1000 | 0 | -1000 |
| | 5 | 1029.1341533 | 53.149492 | -1001.213452 | 1000 | 0 | -1000 |
| | 6 | 1055.609987 | 43.2424267 | -1064.245982 | 1000 | 0 | -1000 |
| | 7 | 1561.609987 | 48.8136348 | -1062.145285 | 1500 | 0 | -1000 |
| | 8 | 1524.134134 | 52.1899523 | -1073.178334 | 1500 | 0 | -1000 |
| | 9 | 1517.439852 | 49.3135634 | -1052.245266 | 1500 | 0 | -1000 |

II.

Verification experiments in a Y direction (a vertical direction): Relative positioning results toward the top and bottom are tested at two meters in front of the positioning apparatus. A photographing position of the imaging device is moved toward the top and bottom by 0.5 meters, 1 meter or 1.5 meters, respectively. When the imaging device performs photographing on an upper side, the Y coordinate of the imaging device is a negative value. When the imaging device performs photographing on a lower side, the Y coordinate of the imaging device is a positive value. All data is in millimeter (mm). X, Y, and Z represent calculated coordinates of the imaging device, and X0, Y0, and Z0 represent actual coordinates of the imaging device when the positioning apparatus is photographed.

| | Sequence number | Calculated coordinates | | | Actual coordinates | | |
| --- | --- | --- | --- | --- | --- | --- | --- |
| | | X | Y | Z | X0 | Y0 | Z0 |
| Upper-side photographing | 1 | -25.602071 | -554.890731 | -2007.487488 | 0 | -500 | -2000 |
| | 2 | -14.134536 | -544.231531 | -2010.241532 | 0 | -500 | -2000 |
| | 3 | -23.523546 | -539.134683 | -2083.134178 | 0 | -500 | -2000 |
| | 4 | 53.578541 | -1065.64222 | -2047.326902 | 0 | -1000 | -2000 |
| | 5 | 31.4460160 | -1041.70648 | -2064.531123 | 0 | -1000 | -2000 |
| | 6 | 19.7947807 | -1038.25477 | -2070.610058 | 0 | -1000 | -2000 |
| | 7 | 54.17524561 | -1530.785446 | -2067.445776 | 0 | -1500 | -2000 |
| | 8 | 41.5356436 | -1527.134641 | -2051.141431 | 0 | -1500 | -2000 |
| | 9 | 58.1235531 | -1517.124153 | -2015.764214 | 0 | -1500 | -2000 |
| Lower-side photographing | 1 | 31.5086481 | 514.2794210 | -2018.552121 | 0 | 500 | -2000 |
| | 2 | 69.1413435 | 510.3483589 | -2084.141535 | 0 | 500 | -2000 |
| | 3 | 59.1438349 | 513.2348832 | -2053.133453 | 0 | 500 | -2000 |
| | 4 | 61.3193857 | 1031.041267 | -1978.181532 | 0 | 1000 | -2000 |
| | 5 | 56.1351345 | 1035.142626 | -2001.213452 | 0 | 1000 | -2000 |
| | 6 | 58.2624524 | 1021.145627 | -2064.242567 | 0 | 1000 | -2000 |
| | 7 | 67.231239 | 1543.849509 | -2005.951525 | 0 | 1500 | -2000 |
| | 8 | 58.8136348 | 1525.724745 | -2103.178334 | 0 | 1500 | -2000 |
| | 9 | 52.1899523 | 1516.134264 | -2072.245266 | 0 | 1500 | -2000 |

As can be seen from the foregoing experimental results, by means of the positioning apparatus in an embodiment of the present invention, when an imaging apparatus performs photographing at a position several meters away from the positioning apparatus, errors between X, Y, and Z coordinate values of the imaging apparatus that are calculated through relative positioning and actual coordinate values are usually only tens of millimeters, thereby providing relatively high accuracy of relative positioning.

References herein to "individual embodiments," "some embodiments," "an embodiment," or "embodiments" refer to that particular features, structures, or properties described in combination with the embodiments are included in at least one embodiment. Therefore, the phrases "in various embodiments," "in some embodiments," "in one embodiment," or "in an embodiment" and the like throughout this specification do not necessarily refer to the same embodiment. In addition, particular features, structures, or properties may be combined in any suitable manner in one or more embodiments. Therefore, a particular feature, structure, or property shown or described in combination with an embodiment may be combined in whole or in part with features, structures, or properties of one or more other embodiments without limitation, so long as the combination is not illogical or does not work. Expressions such as "according to A", "based on A", "through A" or "using A" appearing herein are intended to be non-exclusive, that is, "according to A" may cover "solely according to A" or "according to A and B", unless specifically stated or the context clearly indicates that the meaning is "solely according to A". In the present application, some schematic operational steps are described in a certain order for clarity, but it will be understood by those having ordinary skill in the art that each of these operational steps is not essential and some of them can be omitted or replaced by other steps. These operational steps also do not have to be performed sequentially in the manner shown; instead, some of these operational steps may be performed in a different order, or in parallel, depending on practical requirements, as long as the new execution is not illogical or does not work.

Several aspects of at least one embodiment of the present invention are thus described, and it will be understood that those having ordinary skill in the art may easily make various changes, modifications, and improvements. Such changes, modifications, and improvements are intended to be within the spirit and scope of the present invention. Although the present invention has been described by way of preferred embodiments, the present invention is not limited to the embodiments described herein, but includes various changes as well as variations made without departing from the scope of the present invention.

**Claims**

1. An apparatus for implementing relative positioning, comprising:

   one or more first positioning markers capable of determining a plane; and
   one or more second positioning markers, wherein at least a part of the one or more second positioning markers is located outside the plane defined by the one or more first positioning markers,
   wherein the first positioning markers and the second positioning markers emit or reflect light capable of being acquired by an imaging device.

2. The apparatus of claim 1, wherein the apparatus comprises at least three first positioning markers that are located in a same plane and are not collinear, and the second positioning markers are located outside the plane defined by the first positioning markers.

3. The apparatus of claim 2, wherein

   a distance from the second positioning markers to the plane defined by the first positioning markers is at least 0.2 cm; or
   a distance from the second positioning markers to the plane defined by the first positioning markers is greater than 1/10 of the shortest distance between the first positioning markers.

4. The apparatus of claim 1, wherein the apparatus comprises four first positioning markers, and any three of the four first positioning markers are not collinear.

5. The apparatus of claim 4, wherein the four first positioning markers are arranged in the form of a rectangle, and the second positioning markers are located in the middle of the rectangle in a horizontal direction.

6. The apparatus of claim 1, wherein one or more positioning markers of the first positioning markers and the second positioning markers are configured as data light sources capable of transmitting information.

7. The apparatus of claim 1, further comprising:
   one or more data light sources or visual markers configured for transmitting information.

8. The apparatus of claim 1, wherein the apparatus comprises one or more visual markers configured for transmitting information, and a part of the one or more visual markers are used as the first positioning markers or the second positioning markers.

9. A relative positioning method implemented by using a positioning apparatus, wherein the positioning apparatus comprises one or more first positioning markers capable of determining a plane, and one or more second positioning markers, wherein at least a part of the one or more second positioning markers is located outside the plane defined by the one or more first positioning markers, and the method comprises:

   obtaining an image that is photographed by an imaging device and includes the positioning apparatus;
   obtaining physical position information of the first positioning markers and the second positioning markers;
   determining imaging position information of the first positioning markers and the second positioning markers on the image; and
   determining, according to the physical position information and the imaging position information of the first positioning markers and the second positioning markers in combination with intrinsic parameter information of an imaging component of the imaging device, position information and/or attitude information of the imaging device relative to the positioning apparatus when the image is photographed.

10. The relative positioning method of claim 9, wherein
the physical position information of the first positioning markers and the second positioning markers comprises relative physical position information between these positioning markers or absolute physical position information of these positioning markers.

11. The relative positioning method of claim 9, wherein
the physical position information of the first positioning markers and the second positioning markers is obtained at least partially through communication between the imaging device and the positioning apparatus.

12. The relative positioning method of claim 9, wherein the positioning apparatus further comprises one or more data light sources or visual markers used for transmitting information, or one or more of the first positioning markers and the second positioning markers are configured as data light sources capable of transmitting information, wherein the information transmitted by the data light sources or the visual markers is capable of being recognized by using the imaging device.

13. The relative positioning method of claim 12, wherein the information transmitted by the data light source or the visual marker is capable of being used for obtaining physical position information of the positioning apparatus, the first positioning markers or the second positioning markers.

14. A storage medium, storing a computer program which, when executed by a processor, causes the processor to perform the method of any one of claims 9 to 13.

15. An electronic device, comprising a processor and a memory, wherein the memory stores a computer program which, when executed by the processor, causes the processor to perform the method of any one of claims 9 to 13.

FIG. 1

FIG. 2

FIG. 3

FIG. 4

FIG. 5

FIG. 6

FIG. 7

FIG. 8

FIG. 9

FIG. 10

Obtain physical position information of a first positioning marker and a second positioning marker on a positioning apparatus — 1101

Obtain an image that is photographed by an imaging device and includes the positioning apparatus — 1102

Analyze the image to obtain imaging position information of the first positioning marker and the second positioning marker on the image — 1103

Determine, according to the physical position information and the imaging position information of the first positioning marker and the second positioning marker in combination with intrinsic parameter information of an imaging component of the imaging device, position information and/or attitude information of the imaging device relative to the positioning apparatus when the image is photographed — 1104

FIG. 11

FIG. 12

FIG. 13

## INTERNATIONAL SEARCH REPORT

| International application No. |
|---|
| **PCT/CN2020/093689** |

**A. CLASSIFICATION OF SUBJECT MATTER**

G01C 21/20(2006.01)i

According to International Patent Classification (IPC) or to both national classification and IPC

**B. FIELDS SEARCHED**

Minimum documentation searched (classification system followed by classification symbols)

G01C 21,G06K, H04B 10

Documentation searched other than minimum documentation to the extent that such documents are included in the fields searched

Electronic data base consulted during the international search (name of data base and, where practicable, search terms used)

CNABS, CNTXT, VEN, USTXT, WOTXT, CNKI, IEEE, 定位, 标志, 标签, 标识, 平面, 图像, 成像, 视觉, 摄像, 拍摄, 拍照, 光, 物理, 参数, 内参, position, locat+, optical, light, label, tab, tag, identif+, marker, plane, image, photo

**C. DOCUMENTS CONSIDERED TO BE RELEVANT**

| Category* | Citation of document, with indication, where appropriate, of the relevant passages | Relevant to claim No. |
|---|---|---|
| PX | CN 210225419 U (BEIJING WHYHOW INFORMATION TECHNOLOGY CO., LTD.) 31 March 2020 (2020-03-31)<br>claims 1-10, description [0001]-[0058], figures 1-8 | 1-15 |
| X | CN 102012706 A (QISDA (SUZHOU) CO., LTD.; QISDA CORPORATION) 13 April 2011 (2011-04-13)<br>claims 1 and 6 | 1, 4, 5, 6, 8 |
| Y | CN 102012706 A (QISDA (SUZHOU) CO., LTD.; QISDA CORPORATION) 13 April 2011 (2011-04-13)<br>claims 1 and 6 | 2, 3, 7, 9-15 |
| Y | CN 109341691 A (BAISE UNIVERSITY) 15 February 2019 (2019-02-15)<br>description paragraphs 55-73, 91 | 2, 3, 9-15 |
| Y | CN 207424896 U (BEIJING WHYHOW INFORMATION TECHNOLOGY CO., LTD.) 29 May 2018 (2018-05-29)<br>claim 1 | 7, 12, 13 |
| A | CN 109827575 A (PUDU TECHNOLOGY INC.) 31 May 2019 (2019-05-31)<br>entire document | 1-15 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 September 2020** | **09 September 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/093689** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106248074 A (HIT ROBOT GROUP SHANGHAI CO., LTD.) 21 December 2016 (2016-12-21)<br>        entire document | 1-15 |
| A | WO 2019020200 A1 (FUNDACIO PRIVADA I2CAT INTERNET I INNOVA) 31 January 2019 (2019-01-31)<br>        entire document | 1-15 |
| A | US 2008281515 A1 (SAMSUNG ELECTRONICS CO., LTD.) 13 November 2008 (2008-11-13)<br>        entire document | 1-15 |

Form PCT/ISA/210 (second sheet) (January 2015)

**INTERNATIONAL SEARCH REPORT**
Information on patent family members

International application No.

**PCT/CN2020/093689**

| Patent document cited in search report | | | Publication date (day/month/year) | Patent family member(s) | | | Publication date (day/month/year) |
|---|---|---|---|---|---|---|---|
| CN | 210225419 | U | 31 March 2020 | None | | | |
| CN | 102012706 | A | 13 April 2011 | CN | 102012706 | B | 24 June 2015 |
| CN | 109341691 | A | 15 February 2019 | None | | | |
| CN | 207424896 | U | 29 May 2018 | None | | | |
| CN | 109827575 | A | 31 May 2019 | None | | | |
| CN | 106248074 | A | 21 December 2016 | US | 2019163197 | A1 | 30 May 2019 |
| | | | | EP | 3514492 | A4 | 01 April 2020 |
| | | | | WO | 2018049710 | A1 | 22 March 2018 |
| | | | | EP | 3514492 | A1 | 24 July 2019 |
| WO | 2019020200 | A1 | 31 January 2019 | None | | | |
| US | 2008281515 | A1 | 13 November 2008 | JP | 2008281561 | A | 20 November 2008 |
| | | | | KR | 20080100093 | A | 14 November 2008 |
| | | | | KR | 101355302 | B1 | 05 February 2014 |
| | | | | JP | 4785893 | B2 | 05 October 2011 |
| | | | | US | 7970537 | B2 | 28 June 2011 |

Form PCT/ISA/210 (patent family annex) (January 2015)